# EUROPEAN PATENT APPLICATION

(11) **EP 4 039 752 A1**
(43) Date of publication of application: **10.08.2022**
(21) Application number: 20872911.1
(22) Date of filing: 06.08.2020
(51) Int. Cl.: C08L 101/04, C08K 3/04, C08K 5/00, C08K 5/14, C08K 7/16, C09K 3/10

(54) **FLUORORUBBER COMPOSITION AND SEAL MATERIAL**

(30) Priority: 02.10.2019 JP 2019182081
(71) Applicant: Unimatec Co., Ltd., Tokyo 105-0012 (JP)
(72) Inventor: SHINTAKU, Kazuki, Kitaibaraki-shi, Ibaraki 319-1593 (JP); IKEDA, Akihiko, Kitaibaraki-shi, Ibaraki 319-1593 (JP)
(74) Representative: TBK
(86) International application number: PCT/JP2020/030143
(87) International publication number: WO 2021/065199

(57) **Abstract**

The present invention relates to a fluororubber composition including:
(a) a peroxide-crosslinkable fluorine-containing elastomer;
(b) a spherical particle of a silica/cured melamine resin composite;
(c) carbon black;
(d) an organic peroxide as a crosslinking agent; and
(e) a co-crosslinking agent.

## Description

### Technical Field

The present invention relates to a fluororubber composition and a sealing material.

### Background Art

A formulation of a conventional peroxide-crosslinkable fluorine-containing elastomer generally includes a polymer having a crosslinkable point, a filler, an organic peroxide as a crosslinking agent, a multifunctional unsaturated compound as a co-crosslinking agent, a metal oxide as an acid acceptor, and others in combination, whereby the properties suitable for its application are exhibited. Particularly, a shaped fluororubber article for which a fluorine-containing elastomer is used is excellent in the properties such as heat resistance and chemical resistance, and is thus used as a sealing material for fuel peripheral parts such as fuel hoses and tubes of automobiles.

However, when biodiesel fuel oil is used as fuel together with a fuel peripheral part obtained by shaping a conventional fluororubber, hydrolysis of higher fatty acid esters included in the biodiesel fuel oil is facilitated due to the influence of moisture, humidity, etc., and hydrolysates thereof concernedly accelerate degradation of the fluororubber. Accordingly, the development of fluororubbers having resistance to biodiesel fuel oil is being considered.

Patent Literature 1 discloses that a swollen volume, in biodiesel fuel oil, of a fluororubber product including a polyhydroxy-cured fluorine-containing elastomer can be decreased by using a dicarboxylic acid diester having a specific structural formula in the fluororubber product. Patent Literature 2 discloses that when a specific amount of an acid acceptor consisting of a metal oxide or hydroxide is included in a shaped article of a fluorine-containing elastomer composition including hydrotalcite, swelling of the article with biodiesel fuel oil can be suppressed. Patent Literature 3 discloses that when an acid acceptor selected from the group consisting of hydrous bismuth oxide nitrate compound and bismuth oxide is included in a shaped article of a curable fluorine-containing elastomer composition including a curing agent, a swollen volume thereof in biodiesel fuel oil can be decreased.

Rubber products used as a sealing material, such as an O-ring and a packing material, generate a pressure that makes the compression of rubber to be released to turn back to normal, thereby fulfilling a sealing function. However, use of the sealing material for a long time causes partial permanent set (deformation) thereof to thereby decrease the sealing property. Thus, in a case where a fluororubber is used for sealing application, it is desired that the fluororubber is also excellent in resistance to compression set.

Patent Literature 4 discloses a fluororubber composition that is obtained by blending a spherical particle of a cured melamine resin composite and a fluororubber having a crosslinkable point at which the fluororubber is possible to crosslink via peroxide to improve resistance to compression set. In addition, Patent Literature 4 discloses that the fluororubber composition is free from carbon black to apply a sealing material obtained by vulcanizing and shaping such a fluororubber composition to semiconductor manufacturing equipment which requires plasma resistance.

However, there is no statement about improvement in resistance to biodiesel fuel oil in Patent Literature 4. Patent Literatures 1 to 3 mention resistance to compression set, but in late years, sealing materials obtained by vulcanizing and shaping a fluororubber composition are desired to have excellent resistance to compression set even in harsher conditions (e.g., 200°C, 70 hours).

### Document List

### Patent Literature(s)

Patent Literature 1: Japanese Translation of PCT International Application Publication No. 2012-524156
Patent Literature 2: Japanese Patent Application Laid-Open No. 2013-064157
Patent Literature 3: Japanese Translation of PCT International Application Publication No. 2013-534271
Patent Literature 4: Japanese Patent Application Laid-Open No. 2014-118510

### Summary of Invention

### Technical Problem

The present invention provides a fluororubber composition that gives a vulcanized product excellent in resistance to compression set and resistance to biodiesel fuel oil.

### Solution to Problem

An aspect of the present invention is a fluororubber composition including:
(a) a peroxide-crosslinkable fluorine-containing elastomer;
(b) a spherical particle of a silica/cured melamine resin composite;
(c) carbon black;
(d) an organic peroxide as a crosslinking agent; and
(e) a co-crosslinking agent.

In the aspect of the present invention, the fluororubber composition is free from a metal compound as an acid acceptor.

In the aspect of the present invention, the fluororubber composition includes 5 parts by weight or more and 35 parts by weight or less of the spherical particle of a silica/cured melamine resin composite (b), and 1 part by weight or more and 30 parts by weight or less of the carbon black (c), per 100 parts by weight of the peroxide-crosslinkable fluorine-containing elastomer (a).

In the aspect of the present invention, the fluororubber composition is used as a material for obtaining a sealing material by vulcanizing and shaping.

Another aspect of the present invention is a sealing material obtained by vulcanizing and shaping the fluororubber composition.

In another aspect of the present invention, the sealing material is a sealing material for a component that comes into contact with biodiesel fuel oil.

### Effects of Invention

The present invention can provide a fluororubber composition that can give a vulcanized product excellent in resistance to compression set and resistance to biodiesel fuel oil.

### Description of Embodiments

Hereinafter, embodiments of the present invention will be described. The fluororubber composition according to the present embodiment includes: (a) a peroxide-crosslinkable fluorine-containing elastomer; (b) a spherical particle of a silica/cured melamine resin composite; (c) carbon black; (d) an organic peroxide as a crosslinking agent; and (e) a co-crosslinking agent. The fluororubber composition according to the present embodiment can give a vulcanized product excellent in both resistance to compression set and resistance to biodiesel fuel oil due to a synergistic effect of the spherical particle of a silica/cured melamine resin composite (b) and the carbon black (c). Hereinafter, the components for constituting the fluororubber composition according to the present embodiment will be described in detail.

### (a) Peroxide-crosslinkable fluorine-containing elastomer

The fluororubber composition includes a peroxide-crosslinkable fluorine-containing elastomer as a main component for forming a vulcanized product. The peroxide-crosslinkable fluorine-containing elastomer is a main ingredient for preparing a fluororubber material to be shaped. As such a fluorine-containing elastomer, a polymer obtained by polymerizing singly or copolymerizing at least one fluorine-containing monomer represented by the general formula (I) below can be used, for example. Such fluorine-containing elastomers may be used singly or in combinations of two or more thereof.

CX₂=CXY.... (I)

wherein
X is each independently H or F,
Y is F, a C₁-C₃ perfluoroalkyl group, a C₁-C₃ perfluorooxyalkyl group, or R_{f}(OC₂F₃Z)ₙO-,
R_{f} is a C₁-C₃ perfluoroalkyl group,
Z is F or a CH₃ group, and
n is an integer of 1 to 6.

Examples of the fluorine-containing monomer represented by the general formula (I) include tetrafluoroethylene, hexafluoropropylene, perfluoroalkyl vinyl ether, perfluoroalkoxyethyl vinyl ether, perfluoroalkoxypropyl vinyl ether, vinyl fluoride, and vinylidene fluoride, and examples of the copolymer include vinylidene fluoride/hexafluoropropylene/tetrafluoroethylene terpolymer, vinylidene fluoride/hexafluoropropylene bipolymer, and tetrafluoroethylene/perfluoroalkyl vinyl ether bipolymer.

The peroxide-crosslinkable fluorine-containing elastomer include an iodine group and/or a bromine group as a crosslinkable point in its molecule. The introduction of the iodine group and/or the bromine group, which enables peroxide-crosslinking of the fluororubber, can be carried out by a copolymerization reaction in the presence of an iodine group and/or bromine group-containing saturated or unsaturated compound. For the cases where the iodine group and/or the bromine group is contained in the side chain of the fluorine-containing copolymer, examples include copolymers of a monomer for forming crosslinkable point, such as perfluoro(2-bromoethyl vinyl ether), 3,3,4,4-tetrafluoro-4-bromo-1-butene, 2-bromo-1,1-difluoroethylene, bromotrifluoroethylene, perfluoro(2-iodoethyl vinyl ether), and iodotrifluoroethylene.

In the cases where the iodine group and/or the bromine group is to be contained in the terminal of the fluorine-containing copolymer, a fluoroalkylene compound halogenated at both terminals thereof represented by the general formula (II) below is used.

X₁CₙF₂ₙX₂.... (II)

wherein
X₁ is F, Br, or I,
X₂ is Br, or I, and
n is an integer of 1 to 12.

As the fluoroalkylene compound halogenated at both terminals thereof represented by the general formula (II), the compound where n is an integer of 1 to 6 is preferable in view of the balance between the reactivity and handling, and for example, a copolymer containing an iodine group and/or a bromine group can be used that derives from 1-bromoperfluoroethane, 1-bromoperfluoropropane, 1-bromoperfluorobutane, 1-bromoperfluoropentane, 1-bromoperfluorohexane, 1-iodoperfluoroethane, 1-iodoperfluoropropane, 1-iodoperfluorobutane, 1-iodoperfluoropentane, 1-iodoperfluorohexane, or the like.

When X₁ and X₂ in the general formula (II) are I and/or Br, a crosslinkable point can be introduced into the terminal of a fluorine-containing copolymer. Examples of such a compound to be used include 1-bromo-2-iodotetrafluoroethane, 1-bromo-3-iodoperfluoropropane, 1-bromo-4-iodoperfluorobutane, 2-bromo-3-iodoperfluorobutane, monobromomonoiodoperfluoropentane, monobromomonoiodoperfluoro-n-hexane, 1,2-dibromoperfluoroethane, 1,3-dibromoperfluoropropane, 1,4-dibromoperfluorobutane, 1,5-dibromoperfluoropentane, 1,6-dibromoperfluorohexane, 1,2-diiodoperfluoroethane, 1,3-diiodoperfluoropropane, 1,4-diiodoperfluorobutane, 1,5-diiodoperfluoropentane, and 1,6-diiodoperfluorohexane. These compounds can also be used as a chain transfer agent.

### (b) Spherical particle of a silica/cured melamine resin composite

The spherical particle of a silica/cured melamine resin composite is a spherical composite particle of silica and a melamine resin, and is preferably a spherical melamine resin particle including much silica in the surface layer portion than in the center portion. Such a spherical particle of a silica/cured melamine resin composite is excellent in acid resistance, alkali resistance, and solvent resistance, and thus has excellent resistance to biodiesel fuel oil. Since the fluororubber composition includes the spherical particle of a silica/cured melamine resin composite, a vulcanized product to be obtained from the fluororubber composition can have excellent resistance to biodiesel fuel oil. Furthermore, favorable vulcanized properties can be obtained by the addition of the spherical particle of a silica/cured melamine resin composite. Accordingly, a vulcanized product having the favorable vulcanized properties can be obtained even if the fluororubber composition contains no metal compound as an acid acceptor, such hydrotalcite or zinc oxide, which is a metal component. The spherical particle of a silica/cured melamine resin composite can be produced by a method as described in, for example, Japanese Patent No. 3903809 or Japanese Patent No. 4243848. Specifically, for example, a melamine compound and an aldehyde compound are reacted under a basic condition in an aqueous medium or an aqueous medium including an alkali metal salt of an inorganic acid dissolved therein in which colloidal silica having an average particle size of 5 to 70 nm is suspended, to thereby produce an aqueous solution of a water-soluble initial condensate of a melamine resin, and then an acid catalyst is added to the aqueous solution to deposit a spherical particle of a silica/cured melamine resin composite.

The average particle size of the spherical particle of a silica/cured melamine resin composite is preferably 15 µm or less, more preferably 10 µm or less, and even more preferably 4.5 µm or less, as determined on a SEM image. For the lower limit, the average particle size is preferably 0.1 µm or more, more preferably 0.5 µ.m or more, and even more preferably 2.0 µ.m or more. Particularly, resistance to compression set can be improved when the average particle size of the spherical particle of a silica/cured melamine resin composite is 0.5 µ.m or more and 4.5 µ.m or less.

Examples of a commercially available product of the spherical particle of a silica/cured melamine resin composite to be used include "OPTBEADS (registered trademark)" series manufactured by Nissan Chemical Corporation, including "OPTBEADS (registered trademark) 10500M" (average particle size 10.5 µ.m), "OPTBEADS (registered trademark) 6500M" (average particle size 6.5 µ.m), "OPTBEADS (registered trademark) 3500M" (average particle size 3.5 µ.m), "OPTBEADS (registered trademark) 2000M" (average particle size 2.0 µ.m), and "OPTBEADS (registered trademark) 500S" (average particle size 0.5µ.m). The spherical particles of a silica/cured melamine resin composite may be used singly or in combinations of two or more thereof.

The amount of the spherical particle of a silica/cured melamine resin composite blended is preferably 5 parts by weight or more and 50 parts by weight or less, more preferably 5 parts by weight or more and 35 parts by weight or less, and even more preferably 10 parts by weight or more and 30 parts by weight or less, per 100 parts by weight of the peroxide-crosslinkable fluorine-containing elastomer (a). Particularly, when the amount of the spherical particle of a silica/cured melamine resin composite blended is 5 parts by weight or more and 35 parts by weight or less, excellent resistance to biodiesel fuel oil can be imparted, and when the amount blended is 10 parts by weight or more, resistance to biodiesel fuel oil can be further improved. When the amount blended is 30 parts by weight or less, the hardness is moderate and the balance between the vulcanized properties thus tends to be favorable.

### (c) Carbon black

The carbon black exhibits the improving effect on resistance to compression set, which is necessary for sealing application. Since the fluororubber composition contains the carbon black together with the spherical particle of a silica/cured melamine resin composite, a vulcanized product to be obtained from the fluororubber composition can have particularly excellent resistance to compression set due to a synergistic effect of these materials. Examples of the carbon black include hard carbon, such as Super Abrasion Furnace (SAF) carbon black, Intermediate Super Abrasion Furnace (ISAF) carbon black, High Abrasion Furnace (HAF) carbon black, and Easy Processing Channel (EPC)carbon black; and soft carbon, such as eXtra Conductive Furnace (XCF) carbon black, Fast Extruding Furnace (FEF) carbon black, General Purpose Furnace (GPF) carbon black, High Modulus Furnace (HMF) carbon black, Semi-Reinforcing Furnace (SRF) carbon black, Fine Thermal (FT) carbon black, and Medium Thermal (MT) carbon black. Among these, soft carbon is preferable as the carbon black, and among soft carbon, Medium Thermal carbon black, which has a relatively large particle size, is more preferable.

Examples of a commercially available product of the carbon black to be used include "THERMAX (registered trademark) N990" manufactured by CANCARB LIMITED, which is Medium Thermal carbon black. The carbon blacks may be used singly or in combinations of two or more thereof.

The amount of the carbon black blended is preferably 1 part by weight or more and 50 parts by weight or less, more preferably 1 part by weight or more and 30 parts by weight or less, and even more preferably 5 parts by weight or more and 25 parts by weight or less, per 100 parts by weight of the peroxide-crosslinkable fluorine-containing elastomer (a). Particularly, when the amount of the carbon black blended is 1 part by weight or more and 30 parts by weight or less, excellent resistance to compression set can be imparted, and the amount blended is preferably 5 parts by weight or more. An amount thereof blended of 30 parts by weight or less tends to be able to maintain the balance between vulcanized properties.

### (d) Organic peroxide as crosslinking agent

The organic peroxide as a crosslinking agent is used as a crosslinking agent for forming peroxide-crosslinkages in the fluorine-containing elastomer. Examples of the organic peroxide as a crosslinking agent include dicumyl peroxide, cumene hydroperoxide, p-menthane hydroperoxide, 2,5-dimethylhexane-2,5-dihydroperoxide, di-tert-butyl peroxide, benzoyl peroxide, m-toluyl peroxide, 2,5-dimethyl-2,5-bis(tert-butylperoxy)hexane, 2,5-dimethyl-2,5-bis(tert-butylperoxy)-3-hexyne, 1,3-bis(tert-butylperoxyisopropyl)benzene, 2,5-dimethyl-2,5-di(benzoylperoxy)hexane, 1,1,3,3-tetramethylbutylperoxy-2-ethyl hexanoate, tert-butylperoxybenzoate, tert-butylperoxylaurate, di(tert-butylperoxy)adipate, di(2-ethoxyethylperoxy)dicarbonate, and bis(4-tert-butylcyclohexyl)peroxydicarbonate. Among these, 2,5-dimethyl-2,5-bis(tert-butylperoxy) hexane is preferable.

Examples of a commercially available product of the organic peroxide as a crosslinking agent to be used include "PERHEXA (registered trademark) 25B-40" manufactured by NOF CORPORATION. The organic peroxides as a crosslinking agents may be used singly or in combinations of two or more thereof.

The organic peroxide as a crosslinking agent is preferably 0.5 parts by weight or more and 10 parts by weight or less, and more preferably 1 part by weight or more and 5 parts by weight or less, per 100 parts by weight of the peroxide-crosslinkable fluorine-containing elastomer (a). When the amount thereof blended is 0.5 parts by weight or more, the fluorine-containing elastomer is sufficiently crosslinked, which results in favorable mechanical properties of a vulcanized product to be obtained. When the amount thereof blended is 10 parts by weight or less, moderate crosslinking proceeds, which results in a vulcanized product excellent in properties, such as elongation.

### (e) Co-crosslinking agent

For the peroxide-crosslinking with the organic peroxide as a crosslinking agent, a co-crosslinking agent is used together as a crosslinking aid for the fluorine-containing elastomer. The co-crosslinking agent is preferably a multifunctional unsaturated compound as a co-crosslinking agent. Examples of the co-crosslinking agent include tri(meth)allyl isocyanurate, tri(meth)allyl cyanurate, triallyl trimellitate, N,N'-m-phenylene bismaleimide, diallyl phthalate, tris(diallylamine)-s-triazine, triallyl phosphite, ethylene glycol di(meth)acrylate, diethylene glycol di(meth)acrylate, neopentyl glycol di(meth)acrylate, trimethylolpropane tri(meth)acryl ate, and 1,3-polybutadiene. Among these, tri(meth)allyl isocyanurate is preferable. (Meth)allyl means allyl or methallyl, and similarly, (meth)acrylate means acrylate or methacrylate.

Examples of a commercially available product of the co-crosslinking agent to be used include "TAIC (registered trademark) WH-60" manufactured by Nihon Kasei CO., LTD. The co-crosslinking agents may be used singly or in combinations of two or more thereof.

The co-crosslinking agent is preferably 1 part by weight or more and 5 parts by weight or less, and more preferably 2 parts by weight or more and 4 parts by weight or less, per 100 parts by weight of the peroxide-crosslinkable fluorine-containing elastomer (a). When the amount thereof blended is 1 part by weight or more, the fluorine-containing elastomer is sufficiently crosslinked, which can maintain the mechanical properties and the shape retention of a vulcanized product to be obtained. An amount thereof blended of 5 parts by weight or less involves anticipation of improvement in properties including the mechanical properties and heat resistance, and also is economical.

### (Other components)

In addition to the components described above, various additives generally used in rubber processing may be appropriately blended into the fluororubber composition, if needed. Examples of such additives include a reinforcing material or filler such as barium sulphate, talc, clay and silica, a crosslinking accelerator, a photostabilizer, a plasticizer, a processing aid, a lubricant, an adhesive, a lubricating agent, a flame retardant, a fungicide, an antistatic agent, a colorant, a silane coupling agent, and a crosslink retarder. The amount of these additives blended is not particularly limited, and these additives can be blended appropriately into the fluororubber composition in an amount according to the purpose for the blending as long as the object and the effect of the present invention are not obstructed.

### (Method for producing fluororubber composition)

The method for producing the fluororubber composition according to the present embodiment is not particularly limited. For example, the fluororubber composition can be produced by appropriately blending together the components which are described as components (a) to (e) above, and various additives generally used as compounding ingredients for rubber, if needed, in a predetermined ratio, and then kneading or mixing the components using a closed-type kneading machinery, such as Intermix, Kneader, or Banbury Mixer, or by a means to stir, such as open rolls. Before kneading or mixing, prekneading or premixing may be performed, if necessary.

### (Sealing material)

The fluororubber composition according to the present embodiment can be used as a material for obtaining a sealing material by vulcanizing and shaping, to thereby produce a sealing material. For example, a rubber material in the form of a sheet made of the fluororubber composition obtained by the production method described above can be vulcanized and shaped into a given shape by vulcanizing press, to thereby produce a desired sealing material. At that time, vulcanizing and shaping is generally carried out by press-vulcanization at about 100 to 250°C for about 1 to 120 minutes and oven-vulcanization (second vulcanization) at about 150 to 250°C for about 0 to 30 hours. The resulting vulcanized product by using the fluororubber composition according to the present embodiment is excellent in resistance to compression set and resistance to biodiesel fuel oil, and thus is preferably a sealing material for a component that comes into contact with biodiesel fuel oil. The component that comes into contact with biodiesel fuel oil may be a whole or moiety or a part of specific apparatus or machine. For example, such a sealing material used for an application in which the sealing material comes into contact with biodiesel fuel oil can be suitably used as a sealing material for piping of a diesel car, such as an O-ring, a gasket, a packing, a valve, or oil seal that comes into contact with biodiesel fuel oil. The application of the sealing material obtained by vulcanizing and shaping the fluororubber composition according to the present embodiment is not limited to the material for sealing products as described above, and the sealing material is suitable as a material for other industrial sealing products, such as a sealing material for automobiles, chemical plants, and food production lines. Incidentally, the biodiesel fuel oil refers to liquid fuel containing a fatty acid methyl ester obtained by esterifying an oil as a starting material that is derived from an organism, such as canola oil, soybean oil, and corn oil.

### (Resistance to compression set)

The resulting vulcanized product by vulcanizing and shaping the fluororubber composition according to the present embodiment preferably exhibits a compression set of 30% or less, and more preferably 28% or less, according to ASTM D395 Method B (200°C, 70 hours).

### (Resistance to biodiesel fuel oil)

The resistance to biodiesel fuel oil of a resulting vulcanized product by vulcanizing and shaping the fluororubber composition according to the present embodiment can be evaluated by performing the immersion test in biodiesel fuel oil according to JIS K6258: 2016. More specifically, it can be evaluated by determining the change in the Shore A hardness (pts) and the swollen volume ratio (%) between before and after immersing a vulcanized product in biodiesel fuel oil. At that time, the resistance to biodiesel fuel oil is evaluated according to the kind of the peroxide-crosslinkable fluorine-containing elastomer as the component (a), which is the main component. For example, for the case where a bipolymer, such as vinylidene fluoride/hexafluoropropylene copolymer or tetrafluoroethylene/perfluoroalkyl vinyl ether copolymer, is used as the peroxide-crosslinkable fluorine-containing elastomer, the change in the Shore A hardness (change in the hardness) under the conditions of immersing at 120°C for 168 hours and 336 hours is preferably -2 pts or more, and more preferably -1 pts or more, and the swollen volume ratio (change in the volume) under those conditions is preferably +0.7% or less, and more preferably +0.6% or less. For the case where a terpolymer, such as vinylidene fluoride/hexafluoropropylene/tetrafluoroethylene copolymer, is used as the peroxide-crosslinkable fluorine-containing elastomer, the change in the Shore A hardness (change in the hardness) under the conditions of immersing at 120°C for 168 hours and 336 hours is preferably -5 pts or more, and more preferably -4 pts or more, and the swollen volume ratio (change in the volume) under those conditions is preferably +3.5% or less, and more preferably +3.2% or less.

### Examples

The present invention will be described below by way of Examples, but the present invention is not limited to these Examples as long as not deviating from the spirit of the present invention.

### (Preparation of rubber polymer A)

A 3 L-volume, stainless steel-made reactor equipped with a stirrer was evacuated, and then 1.2 kg of deionized water, 18 g of CF₃CF₂CF₂OCF(CF₃)CF₂OCF(CF₃)COONH₄, 1.5 g of disodium hydrogenphosphate 12 hydrate, and 2.4 g of ICF₂CF₂Br were added to the reactor. Then, 292 g of tetrafluoroethylene (TFE) and 297 g of perfluoromethyl vinyl ether (PMVE) were further added thereto, and the temperature in the reactor was increased to 50°C. The pressure in the reactor after the temperature increase was 0.88 MPa.G. Then, 1.35 g of ammonium persulfate and 0.04 g of sodium sulfite both dissolved in deionized water were press fitted to start the polymerization reaction. Since the pressure in the reactor decreased with the proceeding of the polymerization reaction, a mixed gas of TFF/PMVE = 65/35 mol% was added in portions to the reactor over 8 hours so that the pressure in the reactor was kept within a range of 0.75 to 0.85 MPa.G. After completion of the reaction, a 5 wt% magnesium chloride aqueous solution was added to the resulting aqueous emulsion to thereby coagulate a polymer, which was then washed with water and dried to obtain 490 g of a rubber polymer A. The composition of the rubber polymer A obtained was TFE/PMVE = 65.0/35.0 (mol%). The rubber polymer A corresponds to a peroxide-crosslinkable fluorine-containing elastomer (a).

### (Preparation of rubber polymer B)

A 3 L-volume, stainless steel-made reactor equipped with a stirrer was evacuated, and then 1.3 kg of deionized water, 3.9 g of CF₃CF₂CF₂OCF(CF₃)CF₂OCF(CF₃)COONH₄, 2.6 g of disodium hydrogenphosphate 12 hydrate, 2.6 g of CBr₂=CHF, and 2.4 g of ICF₂CF₂Br were added to the reactor. Then, 49 g of tetrafluoroethylene (TFE), 118 g of vinylidene fluoride (VdF), and 233 g of hexafluoropropylene (HFP) were further added thereto, and the temperature in the reactor was increased to 70°C. The pressure in the reactor after the temperature increase was 3.88 MPa.G. An aqueous solution obtained by dissolving 2.4 g of ammonium persulfate in 50 g of deionized water was then press fitted to start the polymerization reaction. Since the pressure in the reactor decreased with the proceeding of the polymerization reaction, a mixed gas of TFF/VdF/HFP = 16.4/62.2/21.4 mol% was added in portions to the reactor over 10 hours so that the pressure in the reactor was kept within a range of 3.75 to 3.85 MPa.G. After completion of the reaction, a 5 wt% magnesium chloride aqueous solution was added to the resulting aqueous emulsion to thereby coagulate a polymer, which was then washed with water and dried to obtain 400 g of a rubber polymer B. The composition of the rubber polymer B obtained was TFF/VdF/HFP = 16.0/67.1/16.9 (mol%). The rubber polymer B corresponds to a peroxide-crosslinkable fluorine-containing elastomer (a).

### (Example 1)

A fluororubber composition was prepared by kneading, with 8-inch mixing rolls, 100 parts by weight of the rubber polymer A (TFE/PMVE copolymer) obtained above, 20 parts by weight of carbon black (medium thermal (MT) carbon black: product name "THERMAX N990", manufactured by CANCARB LIMITED), 10 parts by weight of a spherical particle of a silica/cured melamine resin composite (product name "OPTBEADS (registered trademark) 2000M" manufactured by Nissan Chemical Corporation), 2.5 parts by weight of an organic peroxide as a crosslinking agent (2,5-dimethyl-2,5-bis(tert-butylperoxy) hexane: product name "PERHEXA (registered trademark) 25B-40" manufactured by NOF CORPORATION), and 3.5 parts by weight of a co-crosslinking agent (triallyl isocyanurate: product name "TAIC (registered trademark) WH-60" manufactured by Nihon Kasei CO., LTD). Then, the kneaded product of the fluororubber composition obtained was subjected to press-vulcanization at 180°C for 10 minutes and further oven-vulcanization (second vulcanization) at 200°C for 6 hours. On the resulting vulcanized product, the properties described below were determined to evaluate various performances.

### <Vulcanized properties>

On the resulting vulcanized product, the hardness was determined with a type A durometer in accordance with JIS K6253-3: 2012, and the 100% modulus, the tensile strength, and the elongation at break were determined in accordance with JIS K6251: 2017. The results of the measurement of these properties are shown in Table 1.

### <Resistance to compression set>

A sample of P-24 O-ring was prepared by press-shaping the resulting vulcanized product. On the sample obtained, the resistance to compression set was determined in accordance with ASTM D395 Method B (200°C, 70 hours). The result is shown in Table 1.

### <Immersion test in biodiesel fuel oil>

A test sample obtained by cutting the resulting vulcanized product to 2 cm x 4 cm (thickness 2 mm) was immersed in a fatty acid methyl ester as biodiesel fuel oil (available from Aburatou corporation) at 120°C for 168 hours or 336 hours, and the change in the hardness in terms of Shore A hardness and the swollen volume ratio (change in the volume) between before and after the immersion were each evaluated according to JIS K6258: 2016. The results are shown in Table 1.

### (Example 2)

A fluororubber composition and a vulcanized product thereof were prepared, followed by performing the above-described determination and evaluation thereof, in the same manner as in Example 1, except that the amount of the carbon black blended was 5 parts by weight, and that the amount of the spherical particle of a silica/cured melamine resin composite blended was 30 parts by weight. The results are shown in Table 1.

### (Example 3)

A fluororubber composition and a vulcanized product thereof were prepared, followed by performing the above-described determination and evaluation thereof, in the same manner as in Example 1, except that the amount of the carbon black blended was 1 part by weight, and that the amount of the spherical particle of a silica/cured melamine resin composite blended was 34 parts by weight. The results are shown in Table 1.

### (Example 4)

A fluororubber composition and a vulcanized product thereof were prepared, followed by performing the above-described determination and evaluation thereof, in the same manner as in Example 1, except that the amount of the carbon black blended was 30 parts by weight, and that the amount of the spherical particle of a silica/cured melamine resin composite blended was 5 parts by weight. The results are shown in Table 1.

### (Example 5)

A fluororubber composition and a vulcanized product thereof were prepared, followed by performing the above-described determination and evaluation thereof, in the same manner as in Example 1, except that the amount of the carbon black blended was 25 parts by weight, and that the amount of the spherical particle of a silica/cured melamine resin composite blended was 10 parts by weight. The results are shown in Table 1.

### (Example 6)

A fluororubber composition and a vulcanized product thereof were prepared, followed by performing the above-described determination and evaluation thereof, in the same manner as in Example 1, except that the rubber polymer B was used instead of the rubber polymer A. The results are shown in Table 1.

### (Example 7)

A fluororubber composition and a vulcanized product thereof were prepared, followed by performing the above-described determination and evaluation thereof, in the same manner as in Example 2, except that the rubber polymer B was used instead of the rubber polymer A. The results are shown in Table 1.

### (Comparative Example 1)

A fluororubber composition and a vulcanized product thereof were prepared, followed by performing the above-described determination and evaluation thereof, in the same manner as in Example 1, except that 3 parts by weight of a metal compound as an acid acceptor A (hydrotalcite: product name "DHT-4A (registered trademark)" manufactured by Kyowa Chemical Industry Co., Ltd.) was blended instead of the spherical particle of a silica/cured melamine resin composite, and also that the amount of the carbon black blended was 35 parts by weight. The results are shown in Table 1.

### (Comparative Example 2)

A fluororubber composition and a vulcanized product thereof were prepared, followed by performing the above-described determination and evaluation thereof, in the same manner as in Example 1, except that 5 parts by weight of a metal compound as an acid acceptor B (zinc oxide, manufactured by The Honjo Chemical Corporation) was blended instead of the spherical particle of a silica/cured melamine resin composite, that the rubber polymer B was used instead of the rubber polymer A, and also that the amount of the carbon black blended was 35 parts by weight. The results are shown in Table 1.

### (Comparative Example 3)

A fluororubber composition and a vulcanized product thereof were prepared, followed by performing the above-described determination and evaluation thereof, in the same manner as in Example 2, except that the rubber polymer B was used instead of the rubber polymer A, and also that the carbon black was not contained. The results are shown in Table 1.

**[Table 1]**

| | | Example 1 | Example 2 | Example 3 | Example 4 | Example 5 | Comparative Example 1 | Example 6 | Example 7 | Comparative Example 2 | Comparative Example 3 |
|---|---|---|---|---|---|---|---|---|---|---|---|
| Fluororubber composition | Rubber polymer A | 100 | 100 | 100 | 100 | 100 | 100 | | | | |
| | Rubber polymer B | | | | | | | 100 | 100 | 100 | 100 |
| | Carbon black | 20 | 5 | 1 | 30 | 25 | 35 | 20 | 5 | 35 | |
| | Spherical particle of silica/cured melamine resin composite | 10 | 30 | 34 | 5 | 10 | | 10 | 30 | | 30 |
| | Co-crosslinking agent | 3.5 | 3.5 | 3.5 | 3.5 | 3.5 | 3.5 | 3.5 | 3.5 | 3.5 | 3.5 |
| | Organic peroxide as crosslinking agent | 2.5 | 2.5 | 2.5 | 2.5 | 2.5 | 2.5 | 2.5 | 2.5 | 2.5 | 2.5 |
| | Metal compound as acid acceptor A | | | | | | 3 | | | | |
| | Metal compound as acid acceptor B | | | | | | | | | 5 | |
| Vulcanized properties | Hardness [pts] | 88 | 91 | 91 | 89 | 89 | 91 | 71 | 74 | 74 | 74 |
| | 100% Modulus [MPa] | 18.2 | - | - | 18.4 | 18.2 | 18.2 | 4.3 | 5.4 | 5.8 | 3.9 |
| | Tensile strength [MPa] | 18.2 | 19.3 | 21.5 | 18.8 | 18.5 | 18.8 | 24.3 | 21.2 | 21.3 | 21.7 |
| | Elongation at break [%] | 100 | 80 | 80 | 110 | 100 | 100 | 310 | 220 | 290 | 280 |
| Resistance to compression set | Compression set [%] | 27 | 27 | 27 | 28 | 27 | 20 | 24 | 25 | 26 | 31 |
| Immersion test in biodiesel fuel oil (120 °C, 168 hours) | Change in hardness [pts] | ±0 | -1 | -1 | -1 | ±0 | -3 | -3 | -2 | -6 | -2 |
| | Change in volume [%] | +0.6 | +0.4 | +0.4 | +0.7 | +0.6 | +0.8 | +3.2 | +2.8 | +3.8 | +2.6 |
| Immersion test in biodiesel fuel oil (120°C, 336 hours) | Change in hardness [pts] | -1 | -1 | -1 | -2 | ±0 | -3 | -4 | -2 | -7 | -2 |
| | Change in volume [%] | +0.5 | +0.4 | +0.4 | +0.7 | +0.6 | +0.7 | +3.1 | +2.8 | +9.7 | +2.7 |

The components shown in Table 1 above are as follows.
- Rubber polymer A: TFE/PMVE bipolymer (molar ratio: TFE/PMVE = 65.0/35.0)
- Rubber polymer B: TFF/VdF/HFP terpolymer (molar ratio: TFF/VdF/HFP = 16.0/67.1/16.9)
- Carbon black: medium thermal (MT) carbon black (product name "THERMAX (registered trademark) N990", manufactured by CANCARB LIMITED)
- Spherical particle of silica/cured melamine resin composite: product name "OPTBEADS (registered trademark) 2000M" (manufactured by Nissan Chemical Corporation)
- Organic peroxide as crosslinking agent: 2,5-dimethyl-2,5-bis(tert-butylperoxy) hexane (product name "PERHEXA (registered trademark) 25B-40" manufactured by NOF CORPORATION)
- Co-crosslinking agent: triallyl isocyanurate (product name "TAIC (registered trademark) WH-60" manufactured by Nihon Kasei CO., LTD.)
- Metal compound as acid acceptor A: hydrotalcite (product name "DHT-4A (registered trademark)" manufactured by Kyowa Chemical Industry Co., Ltd.)
- Metal compound as acid acceptor B: zinc oxide (manufactured by The Honjo Chemical Corporation)

In Table 1 above, the values for the above described components are in "parts by weight", and "-" for "100% modulus" in Examples 2 and 3 means unmeasurable.

The following can be seen from Table 1. The compression set was 30% or less and furthermore, the change in the hardness and the change in the volume (the swollen volume ratio) were -2 pts or more and +0.7% or less, respectively, in the conditions of immersing at 120°C for 168 hours and 336 hours in the immersion test in biodiesel fuel oil in all of Examples 1 to 5, in which a bipolymer was used as a peroxide-crosslinkable fluorine-containing elastomer (a), among Examples 1 to 7, in which a vulcanized product was formed by using a fluororubber composition containing both a spherical particle of a silica/cured melamine resin composite (b) and carbon black (c). On the other hand, in Comparative Example 1, in which a vulcanized product was formed by using a fluororubber composition containing hydrotalcite as a metal compound as an acid acceptor instead of a spherical particle of a silica/cured melamine resin composite, the vulcanized properties and the resistance to compression set were excellent; however, the change in the hardness was -3 pts in the immersion test in biodiesel fuel oil, and thus, the resistance to biodiesel fuel oil was poorer in Comparative Example 1 than in Examples 1 to 5, in which a fluororubber composition containing a spherical particle of a silica/cured melamine resin composite was used.

The compression set was 30% or less and furthermore, the change in the hardness and the change in the volume (the swollen volume ratio) were -5 pts or more and +3.5% or less, respectively, in the conditions of immersing at 120°C for 168 hours and 336 hours in the immersion test in biodiesel fuel oil in all of Examples 6 to 7, in which a terpolymer was used as a peroxide-crosslinkable fluorine-containing elastomer (a). On the other hand, the change in the hardness and the change in the volume were less than -5 pts and more than +3.5%, respectively, in the immersion test in biodiesel fuel oil in Comparative Example 2, in which a vulcanized product was formed by using a fluororubber composition including zinc oxide as a metal compound as an acid acceptor instead of the spherical particle of a silica/cured melamine resin composite. Thus, the resistance to biodiesel fuel oil was poorer in Comparative Example 2 than in Examples 6 to 7, in which a fluororubber composition including the spherical particle of a silica/cured melamine resin composite was used. In Comparative Example 3, in which a vulcanized product was formed by using a fluororubber composition including no carbon black, the compression set was 31% though the vulcanized properties and the resistance to biodiesel fuel oil was excellent. Thus, the compression set was larger, or in other words, the resistance to compression set was poorer in Comparative Example 3 than in Examples 6 to 7, in which a fluororubber composition including carbon black was used.

It can be seen from the above that a vulcanized product having excellent resistance to the compression set and resistance to biodiesel fuel oil can be obtained by using a fluororubber composition containing both a spherical particle of a silica/cured melamine resin composite and carbon black. In addition, a vulcanized product having favorable vulcanized properties was obtained in Examples 1 to 7 without incorporating any metal compound as an acid acceptor, such as hydrotalcite or zinc oxide, into the fluororubber composition.

It can be seen from the results above that a vulcanized product obtained by vulcanizing and shaping a fluororubber composition containing both a spherical particle of a silica/cured melamine resin composite (b) and carbon black (c) have favorable vulcanized properties and also is excellent in both resistance to the compression set and resistance to biodiesel fuel oil, even without using any metal compound as an acid acceptor.

As described above, according to the embodiments of the present invention, a fluororubber composition can be realized that gives a vulcanized product excellent in both resistance to the compression set and resistance to biodiesel fuel oil. Particularly, the resulting vulcanized product by vulcanizing and shaping the fluororubber composition can be suitably used for a sealing material for a component that comes into contact with biodiesel fuel oil, for example.

Embodiments of the present invention have been described hereinabove, but the present invention is not limited by the contents of the embodiments. Each constituent element described above encompasses those that would be appropriately designed by person skilled in the art, those that are substantially the same as that described above, and those that are equivalent to that described above. Furthermore, for each constituent element, those described above therefor can be appropriately combined. Furthermore, various omission, replacement, or modification can be made on each constituent element without deviating the scope of the spirit of the embodiments described hereinabove.

## Claims

1. A fluororubber composition comprising:
(a) a peroxide-crosslinkable fluorine-containing elastomer;
(b) a spherical particle of a silica/cured melamine resin composite;
(c) carbon black;
(d) an organic peroxide as a crosslinking agent; and
(e) a co-crosslinking agent.

2. The fluororubber composition according to claim 1, wherein the fluororubber composition is free from a metal compound as an acid acceptor.

3. The fluororubber composition according to claim 1 or 2, wherein the fluororubber composition comprises 5 parts by weight or more and 35 parts by weight or less of the spherical particle of a silica/cured melamine resin composite (b), and 1 part by weight or more and 30 parts by weight or less of the carbon black (c), per 100 parts by weight of the peroxide-crosslinkable fluorine-containing elastomer (a).

4. The fluororubber composition according to any one of claims 1 to 3, wherein the fluororubber composition is used as a material for obtaining a sealing material by vulcanizing and shaping.

5. A sealing material obtained by vulcanizing and shaping the fluororubber composition according to any one of claims 1 to 4.

6. The sealing material according to claim 5, wherein the sealing material is a sealing material for a component that comes into contact with biodiesel fuel oil.
